# EUROPEAN PATENT APPLICATION

(11) **EP 2 991 325 A1**
(43) Date of publication of application: **02.03.2016**
(21) Application number: 13885162.1
(22) Date of filing: 08.10.2013
(51) Int. Cl.: H04M 1/253

(54) **REMOTE CONFERENCE REALIZING METHOD AND APPARATUS**

(30) Priority: 21.05.2013 CN 201310190682
(71) Applicant: Huawei Technologies Co., Ltd., Longgang District Shenzhen, Guangdong 518129 (CN)
(72) Inventor: LIU, Zhihui, Shenzhen Guangdong 518129 (CN); WU, Xinfeng, Shenzhen Guangdong 518129 (CN)
(74) Representative: Thun, Clemens
(86) International application number: PCT/CN2013/084845
(87) International publication number: WO 2014/187061

(57) **Abstract**

The present invention relates to the field of remote access technologies, and discloses a remote conference implementation method and apparatus, which are specifically that: a conference terminal detects a first mobile terminal at a current conference site after establishing a remote conference successfully, and then, the conference terminal sends, a first dialing instruction to the detected first mobile terminal through a short-range wireless communications channel, to enable the first mobile terminal to establish an audio and video link according to an identifier of a second mobile terminal; and finally, the conference terminal encodes a received audio and video signal of another conference site and/or an obtained audio and video signal of the current conference site, sends the encoded audio and video signal to the second mobile terminal by using the first mobile terminal and based on the audio and video link, receives an audio and video signal sent by the second mobile terminal by using the first mobile terminal, decodes the audio and video signal, and then plays the decoded audio and video signal. In this way, a sound pickup range can be effectively expanded, and when the second mobile terminal joins the conference, the connected remote conference may be prevented from being ended, thereby effectively improving timeliness for joining the remote conference.

## Description

This application claims priority to Chinese Patent Application No. 201310190682.2, filed with the Chinese Patent Office on May 21, 2013 and entitled "REMOTE CONFERENCE IMPLEMENTATION METHOD AND APPARATUS", which is incorporated herein by reference in its entirety.

### TECHNICAL FIELD

The present invention relates to the field of communications technologies, and in particular, to a remote conference implementation method and apparatus.

### BACKGROUND

With development of communications technologies and expansion of enterprise services, many enterprises all need to establish service branches at various places. Therefore, an increasing number of enterprises perform discussion and communication by using a remote conference.

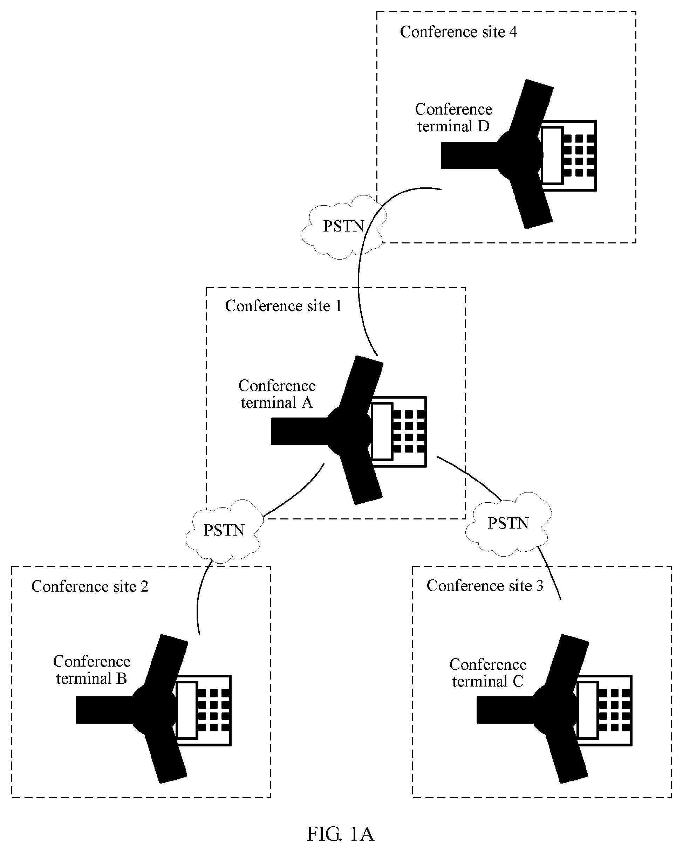

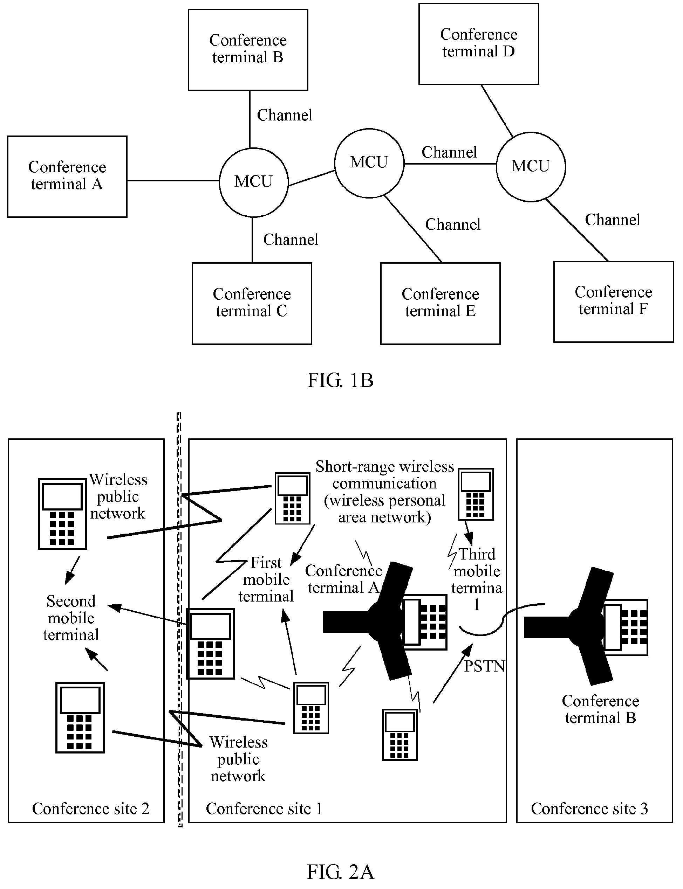

A remote conference refers to that different individuals or groups at multiple geographical locations transmit sound data, image data, and document data to each other by using a transmission line and a multimedia device, to implement instant and interactive communication. The remote conference may be a voice conference or a video conference. FIG. 1A is a schematic diagram of implementing a remote conference in the prior art, where each conference site has one conference terminal, a conference terminal A at a conference site 1 is a moderator, A has three microphones, a sound box, and a keyboard, and other conference terminals B, C, and D all participate in the remote conference by using a PSTN (Public Switched Telephone Network, public switched telephone network). FIG. 1B is a schematic structural diagram of a remote conference system in the prior art, where the remote conference system mainly includes an MCU (Multi-Point Control Unit, multipoint control unit) and a conference terminal.

In the prior art, a remote conference has an advantage of strong real-time performance but the following deficiencies also exist:
1. When a large number of persons at a conference site participate in the remote conference, a special telephone device needs to be used to achieve good long-distance sound pickup and playback effects. However, the special telephone device has good sound pickup and playback effects within a distance range. Therefore, if a distance between a conference participant and the special telephone device exceeds a preset range, a good sound pickup effect cannot be achieved, and the conference participant cannot even participate in the remote conference. For example, currently, conference terminals used by many enterprises for a remote conference expand a sound pickup range by using a microphone array. Generally, the sound pickup range is 3 meters to 5 meters. If a conference participant is at about 10 meters from the conference terminal, a sound pickup effect is still poor, and a remote conference participant may not hear the participant very clearly. If a conference participant is at about 100 meters from the conference terminal, a remote conference participant cannot hear the participant at all, and therefore cannot participate in the remote conference.
2. After the remote conference begins, when a new conference participant joins the conference during the conference, and if the new conference participant intends to join the conference by using the conference terminal, an established multi-party conference connection needs to be ended first. After the new conference participant joins the conference, all the other conference participants join the conference one by one. If the new conference participant does not have a conference terminal, the new conference participant cannot join the remote conference, and therefore cannot participate in the remote conference. In this case, a problem that timeliness for a new conference participant to join a conference is poor exists.

### SUMMARY

Embodiments of the present invention provide a remote conference implementation method, which is used to resolve a problem in the prior art that, for a conference site at which a conference terminal is located, a sound pickup range is small and timeliness for a new conference participant to join a conference is poor.

According to a first aspect, a remote conference implementation method is provided, where the method includes:
detecting, by a conference terminal, a first mobile terminal at a current conference site after establishing a remote conference successfully;
sending, by the conference terminal, a first dialing instruction to the detected first mobile terminal through a short-range wireless communications channel, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier; and
encoding, by the conference terminal, a received audio and video signal of another conference site and/or an obtained audio and video signal of the current conference site, sending the encoded audio and video signal to the second mobile terminal by using the first mobile terminal and based on the audio and video link, receiving an audio and video signal sent by the second mobile terminal by using the first mobile terminal, decoding the audio and video signal, and then playing the decoded audio and video signal.

With reference to the first aspect, in a first possible implementation manner, the detecting a first mobile terminal at a current conference site specifically includes: detecting, in a short-range wireless communication manner, the first mobile terminal at the current conference site.

With reference to the first aspect or the first possible implementation manner of the first aspect, in a second possible implementation manner, the sending, by the conference terminal, a first dialing instruction to the detected first mobile terminal through a short-range wireless communications channel specifically includes: receiving, by the conference terminal, a second dialing instruction sent by a third mobile terminal, where the second dialing instruction carries the identifier of the second mobile terminal, and sending, through the short-range wireless communications channel, the first dialing instruction that carries the identifier of the second mobile terminal to the detected first mobile terminal.

With reference to the first aspect, in a third possible implementation manner, the establishing a remote conference specifically includes: when receiving an establishment instruction sent by a third mobile terminal, performing network dialing by using a public switched telephone network PSTN, and successively inputting identifiers of other conference terminals that are to join the remote conference, to complete the establishment of the remote conference.

With reference to the first aspect or the first to third possible implementation manners of the first aspect, in a fourth possible implementation manner, the to enable the first mobile terminal to establish, according to the identifier of the second mobile terminal, an audio and video link between the first mobile terminal and the second mobile terminal corresponding to the identifier includes: enabling the first mobile terminal to send a signal that carries the identifier of the second mobile terminal to a first base station, and enabling the first base station to send, by using a second base station, the signal that carries the identifier of the second mobile terminal to the second mobile terminal corresponding to the identifier, to establish the audio and video link between the first mobile terminal and the second mobile terminal.

With reference to the first aspect or the first to fourth possible implementation manners of the first aspect, in a fifth possible implementation manner, the encoding, by the conference terminal, a received audio and video signal of another conference site and/or an obtained audio and video signal of the current conference site specifically includes: performing, by the conference terminal, audio and video preprocessing on the obtained audio and video signal of the current conference site, where the audio and video preprocessing includes: one or any combination of the following: AGC (Automatic Gain Control, automatic gain control), AEC (Acoustic Echo Canceller, acoustic echo cancelation), ANS (Automatic Noise Suppression, automatic noise suppression), EQ (Equaliser, dynamic equalization), and dereverberation; and mixing, by the conference terminal, the audio and video signal on which the audio and video preprocessing has been performed and the received audio and video signal of the another conference site and then encoding a mixed signal.

With reference to the first aspect or the first to fifth possible implementation manners of the first aspect, in a sixth possible implementation manner, the receiving an audio and video signal sent by the second mobile terminal by using the first mobile terminal, decoding the audio and video signal, and then playing the decoded audio and video signal specifically includes: receiving the audio and video signal sent by the second mobile terminal by using the first mobile terminal, performing decoding on the received audio and video signal, performing post-decoding processing on the decoded audio and video signal, and then playing the audio and video signal on which the post-decoding processing has been performed, where a process of the post-decoding processing includes: one or any combination of the following: packet loss compensation, line echo cancelation LEC, and mixing.

According to a second aspect, a remote conference implementation apparatus is provided, where the apparatus includes:
a detection unit, configured to detect a first mobile terminal at a current conference site after a remote conference is established successfully;
a link establishment unit, configured to send, through a short-range wireless communications channel, a first dialing instruction to the first mobile terminal detected by the detection unit, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier; and
a codec unit, configured to encode a received audio and video signal of another conference site and/or an obtained audio and video signal of the current conference site, send the encoded audio and video signal to the second mobile terminal by using the first mobile terminal and based on the audio and video link established by the link establishment unit, receive an audio and video signal sent by the second mobile terminal by using the first mobile terminal, decode the audio and video signal, and then play the decoded audio and video signal.

With reference to the second aspect, in a first possible implementation manner, the detection unit is specifically configured to: detect, in a short-range wireless communication manner, the first mobile terminal at the current conference site.

With reference to the second aspect or the first possible implementation manner of the second aspect, in a second possible implementation manner, the link establishment unit is specifically configured to: receive a second dialing instruction sent by a third mobile terminal, where the second dialing instruction carries the identifier of the second mobile terminal, and send, through the short-range wireless communications channel, the first dialing instruction that carries the identifier of the second mobile terminal to the first mobile terminal detected by the detection unit.

With reference to the second aspect, in a third possible implementation manner, the detection unit is specifically configured to: when receiving an establishment instruction sent by a third mobile terminal, perform network dialing by using a public switched telephone network PSTN, and successively input identifiers of other conference terminals that are to join the remote conference, to complete the establishment of the remote conference.

With reference to the second aspect or the first to third possible implementation manners of the second aspect, in a fourth possible implementation manner, the link establishment unit is specifically configured to: enable the first mobile terminal to send a signal that carries the identifier of the second mobile terminal to a first base station, and enable the first base station to send, by using a second base station, the signal that carries the identifier of the second mobile terminal to the second mobile terminal corresponding to the identifier, to establish the audio and video link between the first mobile terminal and the second mobile terminal.

With reference to the second aspect or the first to fourth possible implementation manners of the second aspect, in a fifth possible implementation manner, the codec unit is specifically configured to: perform audio and video preprocessing on the obtained audio and video signal of the current conference site, where the audio and video preprocessing includes: one or any combination of the following: automatic gain control AGC, acoustic echo cancelation AEC, automatic noise suppression ANS, dynamic equalization EQ, and dereverberation; and mix the audio and video signal on which the audio and video preprocessing has been performed and the received audio and video signal of the another conference site and then encode a mixed signal.

With reference to the second aspect or the first to fifth possible implementation manners of the second aspect, in a sixth possible implementation manner, the codec unit is specifically configured to: receive the audio and video signal sent by the second mobile terminal by using the first mobile terminal, perform decoding on the received audio and video signal, perform post-decoding processing on the decoded audio and video signal, and then play the audio and video signal on which the post-decoding processing has been performed, where a process of the post-decoding processing includes: one or any combination of the following: packet loss compensation, line echo cancelation LEC, and mixing.

According to a third aspect, a conference terminal is provided, where the conference terminal includes:
a signal processor, configured to detect a first mobile terminal at a current conference site after a remote conference is established successfully, send, through a short-range wireless communications channel, a first dialing instruction to the first mobile terminal detected by the detection unit, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier, encode a received audio and video signal of another conference site and/or an obtained audio and video signal of the current conference site, and receive and decode the audio and video signal sent by the second mobile terminal by using the first mobile terminal; and
a signal transceiver, configured to send the encoded audio and video signal of the another conference site and/or obtained audio and video signal of the current conference site to the second mobile terminal by using the first mobile terminal and based on the audio and video link established by the signal processor, and play the decoded audio and video signal sent by the second mobile terminal by using the first mobile terminal.

With reference to the third aspect, in a first possible implementation manner, the signal processor is specifically configured to: detect, in a short-range wireless communication manner, the first mobile terminal at the current conference site.

With reference to the third aspect or the first possible implementation manner of the third aspect, in a second possible implementation manner, the signal processor is specifically configured to: receive a second dialing instruction sent by a third mobile terminal, where the second dialing instruction carries the identifier of the second mobile terminal, and send, through the short-range wireless communications channel, the first dialing instruction that carries the identifier of the second mobile terminal to the detected first mobile terminal.

With reference to the third aspect, in a third possible implementation manner, the signal processor is specifically configured to: when receiving an establishment instruction sent by a third mobile terminal, perform network dialing by using a public switched telephone network PSTN, and successively input identifiers of other conference terminals that are to join the remote conference, to complete the establishment of the remote conference.

With reference to the third aspect or the first to third possible implementation manners of the third aspect, in a fourth possible implementation manner, the signal processor is specifically configured to: enable the first mobile terminal to send a signal that carries the identifier of the second mobile terminal to a first base station, and enable the first base station to send, by using a second base station, the signal that carries the identifier of the second mobile terminal to the second mobile terminal corresponding to the identifier, to establish the audio and video link between the first mobile terminal and the second mobile terminal.

With reference to the third aspect or the first to fourth possible implementation manners of the third aspect, in a fifth possible implementation manner, the signal processor is specifically configured to: perform audio and video preprocessing on the obtained audio and video signal of the current conference site, where the audio and video preprocessing includes: one or any combination of the following: automatic gain control AGC, acoustic echo cancelation AEC, automatic noise suppression ANS, dynamic equalization EQ, and dereverberation; and mix the audio and video signal on which the audio and video preprocessing has been performed and the received audio and video signal of the another conference site and then encode a mixed signal.

With reference to the third aspect or the first to fifth possible implementation manners of the third aspect, in a sixth possible implementation manner, the signal processor is configured to: receive the audio and video signal sent by the second mobile terminal by using the first mobile terminal, perform decoding on the received audio and video signal, perform post-decoding processing on the decoded audio and video signal, and then play the audio and video signal on which the post-decoding processing has been performed, where a process of the post-decoding processing includes: one or any combination of the following: packet loss compensation, line echo cancelation LEC, and mixing.

In the embodiments of the present invention, a remote conference implementation method is proposed, where a conference terminal detects a first mobile terminal at a current conference site after establishing a remote conference successfully. Then, the conference terminal sends a first dialing instruction to the detected first mobile terminal through a short-range wireless communications channel, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier. Finally, the conference terminal encodes a received audio and video signal of another conference site and/or an obtained audio and video signal of the current conference site, sends the encoded audio and video signal to the second mobile terminal by using the first mobile terminal and based on the audio and video link, receives an audio and video signal sent by the second mobile terminal by using the first mobile terminal, decodes the audio and video signal, and then plays the decoded audio and video signal. In this way, even if a conference participant that is to join the conference is not within a range with a good sound pickup effect, the conference terminal controls the first mobile terminal at the current conference site to connect to the second mobile terminal that is to join the conference, and sends the received audio and video signal of the another conference site and/or the obtained audio and video signal of the current conference site to the second mobile terminal by using the first mobile terminal, thereby effectively expanding a sound pickup range. In addition, when the second mobile terminal joins the conference, the second mobile terminal can join the remote conference by using only the first mobile terminal at the current conference site, without a need to end an established remote conference connection. In this way, the established remote conference connection does not need to be ended, thereby effectively improving timeliness for a new conference participant to join the conference. The another conference site without a conference terminal can also join the remote conference by using the second mobile terminal, thereby improving timeliness for a new conference participant to join the conference.

### BRIEF DESCRIPTION OF DRAWINGS

FIG. 1A is a schematic diagram of implementing a remote conference in the prior art;
FIG. 1B is a schematic structural diagram of a remote conference system in the prior art;
FIG. 2A is a schematic diagram of implementing a remote conference according to an embodiment of the present invention;
FIG. 2B is a first detailed flowchart of a process of implementing a remote conference according to an embodiment of the present invention;
FIG. 2C is a schematic diagram of an audio sending stream that is generated when a conference terminal sends an audio and video signal according to an embodiment of the present invention;
FIG. 3A is a second detailed flowchart of a process of implementing a remote conference with a conference terminal as a moderator according to an embodiment of the present invention;
FIG. 3B is a schematic diagram of implementing a remote conference with a conference terminal as a moderator according to an embodiment of the present invention;
FIG. 3C is a schematic diagram of an audio sending stream that is generated when a conference terminal sends a sound signal according to an embodiment of the present invention;
FIG. 3D is a schematic diagram of an audio sending stream that is generated when a conference terminal receives a sound signal according to an embodiment of the present invention;
FIG. 4A is a second detailed flowchart of a process of implementing a remote conference with a third mobile terminal as a moderator according to an embodiment of the present invention;
FIG. 4B is a schematic diagram of implementing a remote conference with a third mobile terminal as a moderator according to an embodiment of the present invention;
FIG. 5 is a schematic functional structural diagram of an implementation apparatus according to an embodiment of the present invention; and
FIG. 6 is a schematic functional structural diagram of a conference terminal according to an embodiment of the present invention.

### DESCRIPTION OF EMBODIMENTS

To resolve a problem in the prior art that a sound pickup range is small and timeliness for a new conference participant to join a conference is poor, in the embodiments of the present invention, a remote conference implementation method is proposed, where a conference terminal detects a first mobile terminal at a current conference site after establishing a remote conference successfully. Then, the conference terminal sends, a first dialing instruction to the detected first mobile terminal through a short-range wireless communications channel, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier. Finally, the conference terminal encodes a received audio and video signal of another conference site and/or an obtained audio and video signal of the current conference site, sends the encoded audio and video signal to the second mobile terminal by using the first mobile terminal and based on the audio and video link, receives an audio and video signal sent by the second mobile terminal by using the first mobile terminal, decodes the audio and video signal, and then plays the decoded audio and video signal. In this way, even if a conference participant that is to join the conference is not within a range with a good sound pickup effect, the conference terminal controls the first mobile terminal at the current conference site to connect to the second mobile terminal that is to join the conference, and sends the received audio and video signal of the another conference site and/or the obtained audio and video signal of the current conference site to the second mobile terminal by using the first mobile terminal, thereby effectively expanding a sound pickup range. In addition, when the second mobile terminal joins the conference, the second mobile terminal can join the remote conference by using only the first mobile terminal at the current conference site, without a need to end an established remote conference connection. In this way, the established remote conference connection does not need to be ended, thereby effectively improving timeliness for a new conference participant to join the conference. The another conference site without a conference terminal can also join the remote conference by using the second mobile terminal, thereby improving timeliness for a new conference participant to join the conference.

With development of communications technologies, people possess an increasing number of personal communications devices, for example, a mobile phone, a notebook computer, and a PDA (Personal Digital Assistant, personal digital assistant), and most of these devices have short-range communications capabilities. Therefore, people are increasingly keen on connecting these devices at their side together to form one wireless personal area network, so that resources and capabilities of these devices can be shared.

Currently, a Bluetooth technology is a technology that is used in short-range communication, and one important application model of Bluetooth is a CTP (Cordless Telephony Profile, that is, Cordless Telephony Profile) gateway, where the CTP gateway is short for a Bluetooth telephony gateway. A maximum of seven communications terminals with Bluetooth wireless communications capabilities, such as, intelligent cellular phones or PDAs, may be allowed to connect to the CTP gateway. A communications terminal that connect to the gateway is referred to as a Bluetooth extension, and the gateway allocates one extension number to each Bluetooth extension. A conference terminal may dial by using a Bluetooth extension connected to the gateway, to establish a remote communications connection. In addition, the Bluetooth extension may establish a data link to another Bluetooth extension by using the gateway.

The Bluetooth technology further has an important application HFP (Hands-free Profile, hands-free profile) hands-free configuration file, which enables a Bluetooth device to control a telephone to, for example, answer a call, hang up, reject a call, and perform voice activated dialing.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes exemplary implementation manners of the present invention in detail with reference to the accompanying drawings.

### Embodiment 1

In Embodiment 1 of the present invention, a detailed procedure of implementing a remote conference is as follows:

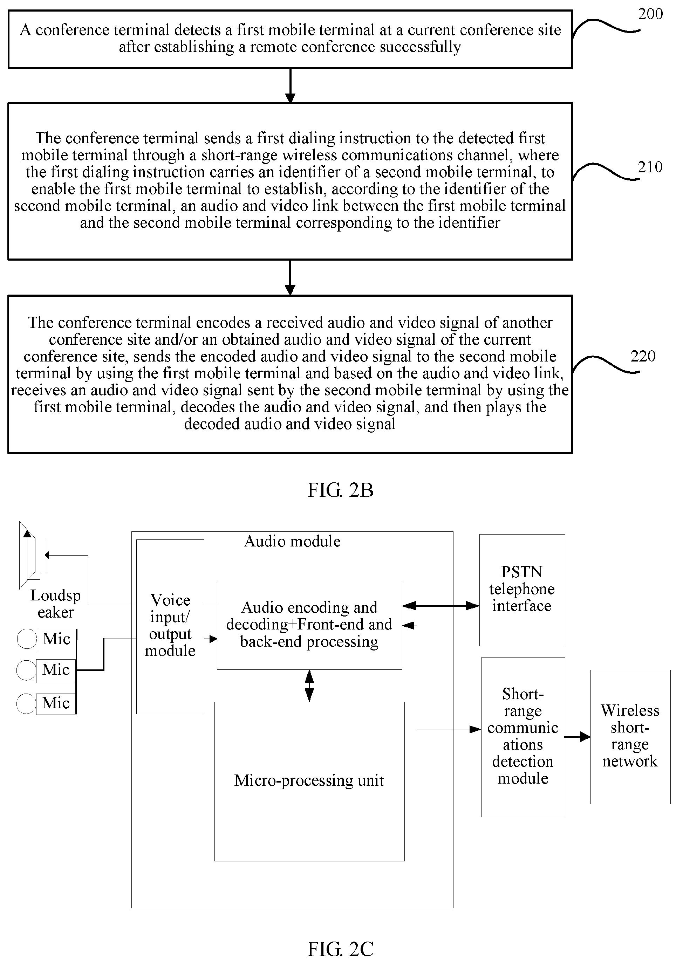

(FIG. 2A is a schematic diagram of implementing a remote conference according to an embodiment of the present invention, FIG. 2B is a detailed flowchart of implementing a remote conference according to an embodiment of the present invention, and FIG. 2C is a schematic diagram of an audio sending stream that is generated when a conference terminal sends an audio and video signal according to an embodiment of the present invention.)

Step 200: A conference terminal detects a first mobile terminal at a current conference site after establishing a remote conference successfully.

In this embodiment of the present invention, when a conference terminal at a conference site 1 shown in FIG. 2A establishes a remote conference, the conference terminal may establish the remote conference by means of PSTN network dialing and according to a user instruction, or, after receiving a dialing instruction sent by a third mobile terminal at the conference site 1 shown in FIG. 2A according to a user instruction, establish the remote conference by means of PSTN network dialing.

In this embodiment of the present invention, no matter whether the conference terminal establishes the remote conference according to the user instruction or after receiving the dialing instruction of the third mobile terminal, when establishing the remote conference, the conference terminal needs to first perform network dialing by using a PSTN, and then successively input identifiers of other conference terminals that are to join the remote conference, thereby completing the establishment of the remote conference.

In this embodiment of the present invention, there are multiple manners in which the conference terminal at the conference site 1 shown in FIG. 2A detects any first mobile terminal at the conference site 1. Preferably, the first mobile terminal at the conference site 1 is detected in a short-range wireless communication manner, or after a detection instruction sent by the third mobile terminal at the conference site 1 shown in FIG. 2A is received, the first mobile terminal at the conference site 1 is detected in the short-range wireless communication manner, where the short-range wireless communication may be a Bluetooth-based communications technology, a WIFI-based communications technology, a Zig Bee-based communications technology, or an ultra-wideband-based communications technology.

The above-mentioned first mobile terminal at the first conference site that is detected in the short-range wireless communication manner refers to that, if a short-range wireless communications technology is a Bluetooth-based communications technology, the detected first mobile terminal refers to a first mobile terminal with a Bluetooth function enabled; if the short-range wireless communications technology is a WIFI-based communications technology, the detected first mobile terminal refers to a first mobile terminal with a WIFI function enabled; if the short-range wireless communications technology is a Zig Bee-based communications technology, the detected first mobile terminal refers to a first mobile terminal with a Zig Bee function enabled.

In this embodiment of the present invention, after the conference terminal at the conference site 1 shown in FIG. 2A detects the first mobile terminal at the conference site 1, the conference terminal allocates a sub-machine address to the first mobile terminal, and establishes a connection to the first mobile terminal.

Step 210: The conference terminal sends a first dialing instruction to the detected first mobile terminal through a short-range wireless communications channel, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier.

In this embodiment of the present invention, when the conference terminal at the conference site 1 shown in FIG. 2A sends the first dialing instruction to the detected first mobile terminal through the short-range wireless communications channel, the conference terminal may send the first dialing instruction that carries the identifier of the second mobile terminal to the detected first mobile terminal when inputting the identifier of the second mobile terminal at the conference site 1 or a conference site 2 shown in FIG. 2A according to a user instruction, or send the first dialing instruction that carries the identifier of the second mobile terminal to the detected first mobile terminal when receiving a second dialing instruction that carries the identifier of the second mobile terminal and is sent by the third mobile terminal at the conference site 1 shown in FIG. 2A. If the conference terminal receives the second dialing instruction that carries the identifier of the second mobile terminal and is sent by the third mobile terminal at the conference site 1, a user inputs the identifier of the second mobile terminal into the third mobile terminal.

In this embodiment of the present invention, no matter whether the conference terminal at the conference site 1 shown in FIG. 2A sends the first dialing instruction that carries the identifier of the second mobile terminal to the detected first mobile terminal at the conference site 1 when inputting the identifier of the second mobile terminal at the conference site 1 or the conference site 2 shown in FIG. 2A, or sends the first dialing instruction that carries the identifier of the second mobile terminal to the detected first mobile terminal at the conference site 1 only when receiving the second dialing instruction that carries the identifier of the second mobile terminal and is sent by the third mobile terminal at the conference site 1 shown in FIG. 2A, after receiving the first dialing instruction, the first mobile terminal at the conference site 1 needs to first parse the first dialing instruction, and then send, according to the parsed-out identifier of the second mobile terminal that is carried in the first dialing instruction, an audio and video connection establishment request to the second mobile terminal corresponding to the identifier. After the second mobile terminal receives the request, the first mobile terminal completes the establishment of the audio and video link between the first mobile terminal and the second mobile terminal corresponding to the identifier. The first mobile terminal and the second mobile terminal are connected to each other by using a public wireless network, such as, CDMA (Code Division Multiple Access, Code Division Multiple Access), TD-SCDMA (Time Division Synchronized Code Division Multiple Access, Time Division Synchronized Code Division Multiple Access), or GSM (Global System for Mobile Communications, Global System for Mobile Communications).

In this embodiment of the present invention, there are multiple manners in which the first mobile terminal establishes, according to the identifier of the second mobile terminal, the audio and video link between the first mobile terminal and the second mobile terminal corresponding to the identifier. Preferably, the first mobile terminal sends a signal that carries the identifier of the second mobile terminal to a first base station, and then, the first base station sends, by using a second base station, the signal that carries the identifier of the second mobile terminal to the second mobile terminal corresponding to the identifier, to establish the audio and video link between the first mobile terminal and the second mobile terminal.

In addition, after receiving the request from the first mobile terminal, the second mobile terminal sends feedback connection information to the first mobile terminal, and after receiving the feedback connection information sent by the first mobile terminal, the conference terminal completes establishment of an SCO (Synchronous Connection Oritened, synchronous connection oriented) audio and video link between the first mobile terminal and the second mobile terminal.

Step 220: The conference terminal encodes a received audio and video signal of another conference site and/or an obtained audio and video signal of the current conference site, sends the encoded audio and video signal to the second mobile terminal by using the first mobile terminal and based on the audio and video link, receives an audio and video signal sent by the second mobile terminal by using the first mobile terminal, decodes the audio and video signal, and then plays the decoded audio and video signal.

In this embodiment of the present invention, there are multiple specific implementation manners in which the conference terminal at the conference site 1 shown in FIG. 2A encodes a received audio and video signal of a third conference site and/or the obtained audio and video signal of the conference site 1. Preferably, the following manners may be used:
Audio and video preprocessing is performed on the obtained audio and video signal of the conference site 1, where the audio and video preprocessing includes: one or any combination of the following: AGC, AEC, ANS, EQ, and dereverberation; the audio and video signal on which the audio and video preprocessing has been performed and the received audio and video signal of the third conference site are mixed and a mixed audio and video signal is encoded, where when the mixed audio and video signal is encoded, the encoding is performed twice, and then the audio and video signal that is encoded twice is sent to the first mobile terminal at the conference site 1. After receiving the audio and video signal that is encoded twice, the first mobile terminal performs decoding processing on the audio and video signal, and then sends, based on the audio and video link, the decoded audio and video signal to the second mobile terminal at the conference site 1 or the conference site 2. If the second mobile terminal is located at the conference site 1, the second mobile terminal is far from the conference terminal, and a sound pickup effect is poor.

The foregoing operations are a process during which the conference terminal sends, to the second mobile terminal, the received audio and video signal of the conference site 3 and/or the obtained audio and video signal of the conference site 1. Similarly, in an actual application, the conference terminal at the conference site 1 may also receive the audio and video signal sent by the second mobile terminal at the conference site 2 by using the first mobile terminal at the conference site 1, decode the received audio and video signal of the conference site 2 and play the decoded audio and video signal. There are multiple implementation manners in which the audio and video signal of the conference site 2 that is sent by the second mobile terminal by using the first mobile terminal is received and decoded, and then the decoded audio and video signal is played. For example, after the audio and video signal of the conference site 2 that is sent by the second mobile terminal by using the first mobile terminal is received based on the public wireless network, decoding are performed on the audio and video signal, post-decoding processing is performed on the decoded audio and video signal, and then, the audio and video signal of the conference site 2 on which the post-decoding processing has been performed is played by using a loudspeaker and is transmitted to the third conference site by using the PSTN, to complete the receiving of the audio and video signal sent by the second mobile terminal, where the post-decoding processing includes: one or any combination of the following: packet loss compensation, LEC, and mixing.

In an actual application, during the remote conference, multiple conference participants may also be added, that is, the conference terminal at the conference site 1 shown in FIG. 2A may connect to multiple second mobile terminals, where the second mobile terminals may be located at the conference site 2 or another conference site except the conference site 1 and the conference site 2. When multiple second mobile terminals need to be added, the conference terminal may connect to the multiple second mobile terminals by using one first mobile terminal at the conference site 1, or the conference terminal may connect to the multiple second mobile terminals by using multiple first mobile terminals at the conference site 1. The foregoing two manners may both be implemented by using step 200 to step 230. It should be noted that when the conference terminal connects to at least two second mobile terminals, if the conference terminal connects to all the second mobile terminals by using one first mobile terminal, a sub-machine address is allocated to the detected first mobile terminal, a first dialing instruction that carries identifiers of all the second mobile terminals is sent to the detected first mobile terminal, and the first mobile terminal successively establishes, according to each of the identifiers that are carried in the first dialing instruction, an audio and video link between the first mobile terminal and a second mobile terminal corresponding to the identifier; if the conference terminal connects to second mobile terminals by using different first mobile terminals, different sub-machine addresses are allocated to the mobile terminals, a first dialing instruction that carries identifiers of the different second mobile terminals are sent to each of the first mobile terminals, and each of the first mobile terminals establishes, according to the identifiers of the second mobile terminals that are carried in the received first dialing instruction, an audio and video link between the first mobile terminal and a second mobile terminal corresponding to an identifier.

After the multiple conference participants, that is, the multiple second mobile terminals, are added, the conference terminal may receive, by using the first mobile terminal, audio and video signals of the second conference site that are sent by the at least two second mobile terminals, decode the received audio and video signals of the second conference site, perform mixing processing on the decoded audio and video signals, and then play a mixed audio and video signal, to complete the receiving. After receiving sound signals of the second conference site that are sent by the at least two second mobile terminals, the first mobile terminal needs to encode and decode the received sound signals, and send the sound signals obtained after the encoding and decoding to the conference terminal. Similarly, when the conference terminal shown in FIG. 2A receives, by using the first mobile terminal at the conference site 1, the audio and video signals sent by the at least second mobile terminals, the conference terminal may receive the audio and video signals by using one first mobile terminal at the conference site 1, or receive the audio and video signals by using multiple first mobile terminals at the conference site 1.

An exemplary execution body mentioned in the foregoing step 200 to step 230 is the conference terminal, and in an actual application, there are other execution bodies for the foregoing step 200 to step 230; and details are not described herein again.

In this embodiment of the present invention, when receiving an establishment instruction sent by a third mobile terminal at the conference site 1, a conference terminal shown in FIG. 2A performs network dialing by using a PSTN, to complete establishment of a remote conference; when receiving a detection instruction sent by the third mobile terminal at the conference site 1, the conference terminal detects a first mobile terminal at the conference site 1 by using a short-range wireless communications channel; and when receiving a second dialing instruction that carries an identifier of a second mobile terminal and is sent by the third mobile terminal at the conference site 1, the conference terminal sends a first dialing instruction that carries the identifier of the second mobile terminal to the detected first mobile terminal. In this case, the third mobile terminal at the conference site 1 is a moderator; otherwise, the conference terminal is the moderator.

In the foregoing implementation solution, the conference terminal connects to the second mobile terminal at the conference site 1 or the another conference site that is far from the conference terminal by using the first mobile terminal at the conference site 1, and then transmits, by using the first mobile terminal at the conference site 1, the received audio and video signal of the third conference site and/or the obtained audio and video signal of the conference site 1 to the second mobile terminal at the conference site 1 or the second conference site, or receives the audio and video signal of the conference site at which the second mobile terminal is located, which is sent by the second mobile terminal located at the second conference site, that is, the conference terminal connects to the second mobile terminal. The first mobile terminal plays a role of "a wireless PSTN", that is, the first mobile terminal itself only plays a role of forwarding, that is, sending, to the second mobile terminal, the audio and video signal of the third conference site that is received by the conference terminal and/or the audio and video signal of the conference site 1 that is obtained by the conference terminal, or sending the audio and video signal of the second conference site at which the second mobile terminal is located to the conference terminal. In this way, even a conference participant that holds the second mobile terminal and is far from the conference terminal, or a conference participant that holds the second mobile terminal and is not at a same conference site with the conference terminal can well receive the audio and video signal of the first conference site at which the conference terminal is located, thereby expanding a sound pickup range. When the second mobile terminal connects to the conference terminal, the connected remote conference, that is, a connection between a conference terminal A and a conference terminal B, does not need to be ended, the second mobile terminal can join the conference in time. In addition, in a case in which the second conference site does not have a conference terminal, a conference participant may join the remote conference by using the second mobile terminal, therefore improving timeliness for a new conference participant to join the conference.

To better understand this embodiment of the present invention, the following provides a specific application scenario and further describes in detail a process of implementing a remote conference.

### Embodiment 2

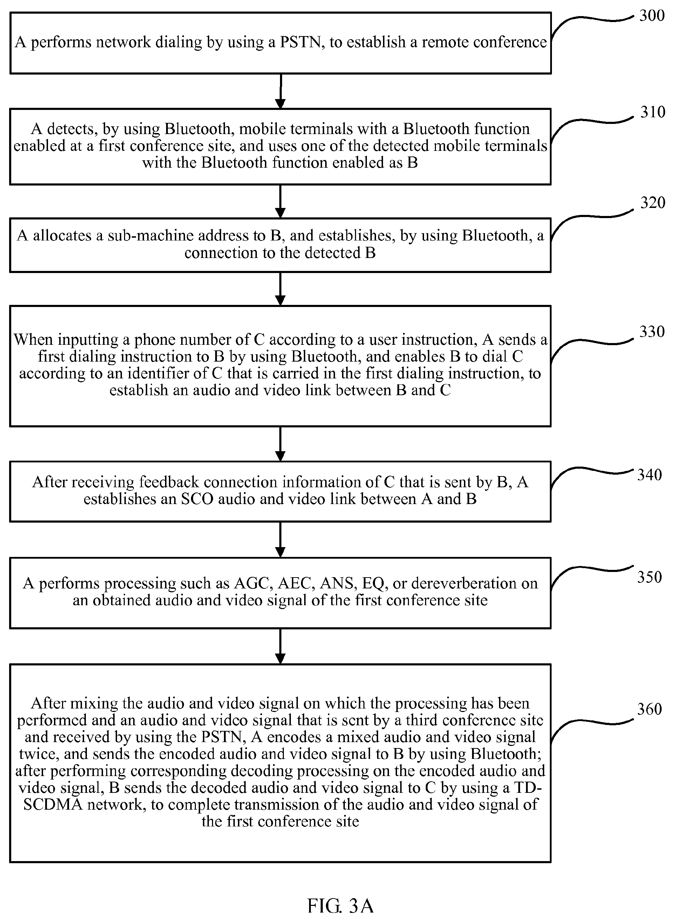

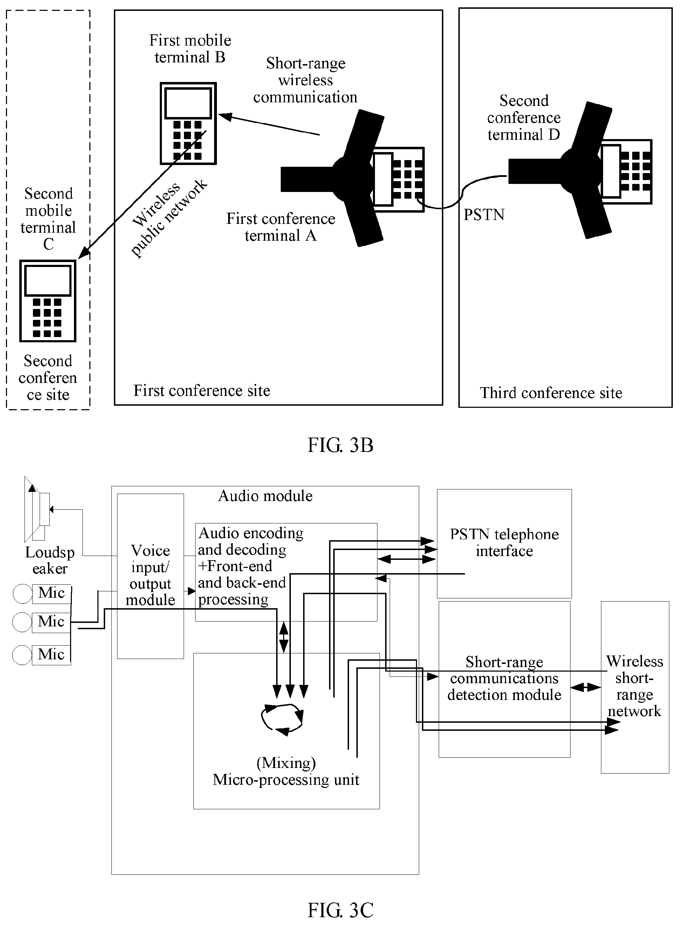

During a remote conference, one participant who is not at a same conference site with a conference terminal is added, and a specific implementation flowchart is shown in FIG. 3A: (Referring to FIG. 3B, A is a first conference terminal, B is a first mobile terminal, C is a second mobile terminal, D is a second conference terminal, A and B are both at a first conference site, C is at a second conference site, D is at a third conference site, and A is a moderator.)

Step 300: A performs network dialing by using a PSTN, to establish a remote conference.

Step 310: A detects, by using Bluetooth, mobile terminals with a Bluetooth function enabled at a first conference site, and uses one of the detected mobile terminals with a Bluetooth function enabled as B.

Step 320: A allocates a sub-machine address to B, and establishes, by using Bluetooth, a connection to the detected B.

Step 330: When inputting a phone number of C according to a user instruction, A sends a first dialing instruction to B by using Bluetooth, and enables B to dial C according to an identifier of C that is carried in the first dialing instruction, to establish an audio and video link between B and C.

In this step, after successfully parsing the received first dialing instruction, B dials C, to establish the audio and video link between B and C, where a call and video connection is established between B and C by using TD-SCDMA.

Step 340: After receiving feedback connection information of C that is sent by B, A establishes an SCO audio and video link between A and B.

Step 350: A performs processing such as AGC, AEC, ANS, EQ, or dereverberation on an obtained audio and video signal of the first conference site.

Step 360: After mixing the audio and video signal on which the processing has been performed and an audio and video signal that is sent by a third conference site and received by using the PSTN, A encodes a mixed audio and video signal twice, and sends the encoded audio and video signal to B by using Bluetooth; after performing corresponding decoding processing on the encoded audio and video signal, B sends the decoded audio and video signal to C by using a TD-SCDMA network, to complete transmission of the audio and video signal of the first conference site.

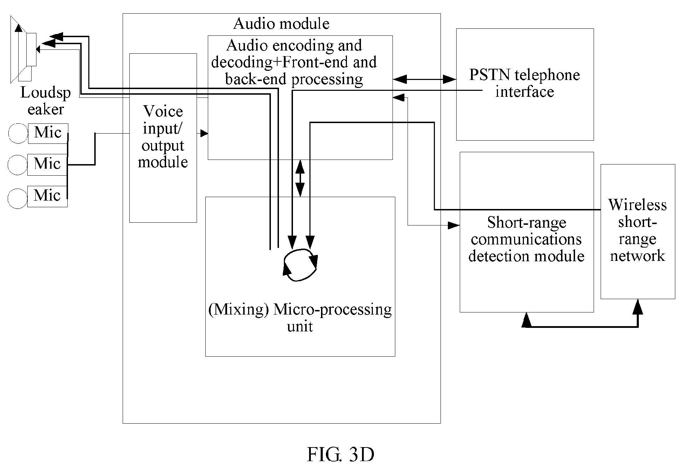

The foregoing step 300 to step 360 are a process of transmitting a sound at the first conference site to C. FIG. 3C is a schematic diagram of an audio sending stream that is generated when A sends an audio and video signal. In an actual application, an audio and video signal of the second conference site may also be transmitted to A, which is specifically that the audio and video signal of the second conference site is sent to A by using B; A decodes the audio and video signal, performs packet loss compensation, LEC, and mixing on the decoded audio and video signal, and plays, at the first conference site, a mixed audio and video signal by using a loudspeaker; and A transmits the mixed audio and video signal to the third conference site by using the PSTN, to complete the receiving of the audio and video signal of the second conference site. FIG. 3D is a schematic diagram of an audio receiving stream that is generated when A receives an audio and video signal.

The foregoing step 300 to step 360 are a process of transmitting the audio and video signal of the first conference site to C, that is, a process of adding one conference participant. In an actual application, during the remote conference, when multiple second mobile terminals, that is, multiple conference participants, need to be added, the conference terminal may connect to all the second mobile terminals by using one first mobile terminal at the first conference site, or the conference terminal may connect to the multiple second mobile terminals by using multiple first mobile terminals at the first conference site.

For example, when a conference terminal A connects to three second mobile terminals (a second mobile terminal 1, a second mobile terminal 2, and a second mobile terminal 3) by using one first mobile terminal, A determines, by using Bluetooth, one mobile terminal in three mobile terminals with the Bluetooth function enabled, as the first mobile terminal (a first mobile terminal 1), establishes a connection to the first mobile terminal 1, allocates a sub-machine address to the first mobile terminal 1, and sends an audio and video signal of another conference site that is received by A and/or an audio and video signal of the conference site 1 that is obtained by A to the second mobile terminal 1 by using the first mobile terminal 1, that is, A connects to the second mobile terminal 1. Then, A sends the audio and video signal of the another conference site that is received by A and/or the audio and video signal of the conference site 1 that is obtained by A to the second mobile terminal 2 by using the first mobile terminal 1, that is, A connects to the second mobile terminal 2. Finally, A sends the audio and video signal of the another conference site that is received by A and/or the audio and video signal of the conference site 1 that is obtained by A to the second mobile terminal 3 by using the first mobile terminal 1, that is, A connects to the second mobile terminal 3.

For another example, when a conference terminal A connects to three second mobile terminals (a second mobile terminal 1, a second mobile terminal 2, and a second mobile terminal 3) by using three first mobile terminals, A determines, by using Bluetooth, three mobile terminals with the Bluetooth function enabled, as first mobile terminals (a first mobile terminal 1, a first mobile terminal 2, and a first mobile terminal 3), and establishes a connection to each of the three first mobile terminals, allocates a corresponding sub-machine address to each of the three first mobile terminals: a sub-machine address 1 corresponds to the first mobile terminal 1, a sub-machine address 2 corresponds to the first mobile terminal 2, and a sub-machine address 3 corresponds to the first mobile terminal 3, and sends an audio and video signal of another conference site that is received by A and/or an audio and video signal of the conference site 1 that is obtained by A to the second mobile terminal 1 by using the first mobile terminal 1, that is, A connects to the second mobile terminal 1. Then, A sends the audio and video signal of the another conference site that is received by A and/or the audio and video signal of the conference site 1 that is obtained by A to the second mobile terminal 2 by using the first mobile terminal 2, that is, A connects to the second mobile terminal 2. Finally, A sends the audio and video signal of the another conference site that is received by A and/or the audio and video signal of the conference site 1 that is obtained by A to the second mobile terminal 3 by using the first mobile terminal 3, that is, A connects to the second mobile terminal 3.

The conference terminal A may also receive an audio and video signal of a conference site at which a second mobile terminal is located, and when there are multiple second mobile terminals, the conference terminal needs to mix received audio and video signals of the multiple second mobile terminals, and then transmit a mixed audio and video signal by using the loudspeaker. Certainly, when picking up audio and video signals of multiple conference sites, the conference terminal A first mixes the audio and video signals of the multiple conference sites, and then sends mixed audio and video signals to corresponding second mobile terminals by using different first mobile terminals, to complete the sending.

### Embodiment 3

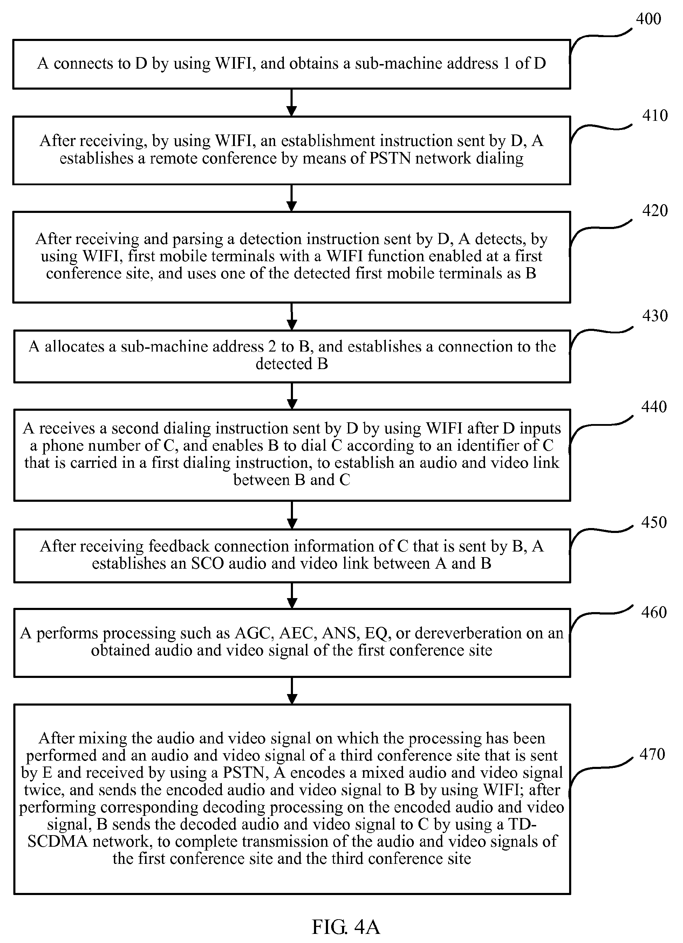

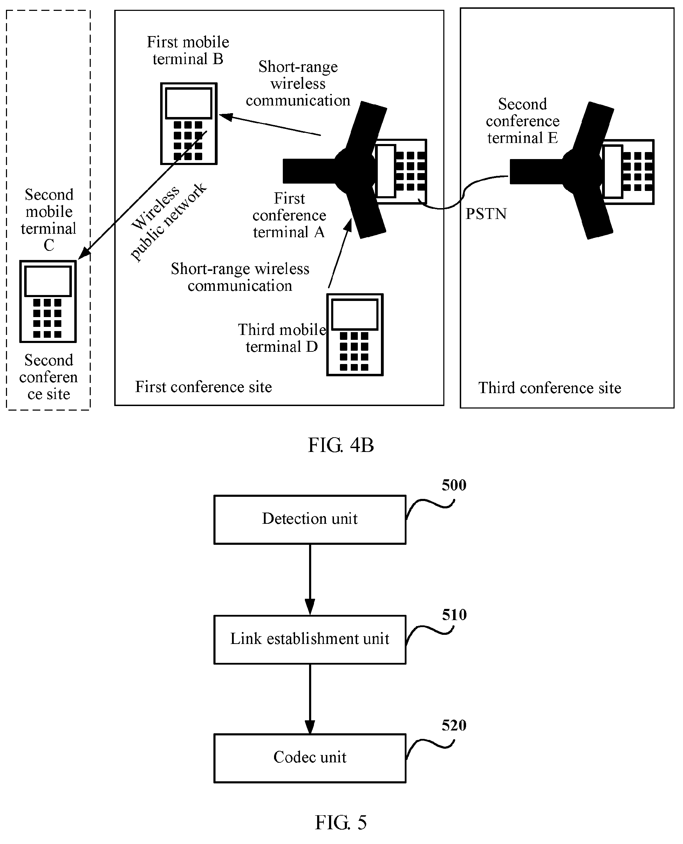

During a remote conference, one participant who is absent is added, and a specific implementation flowchart is shown in FIG. 4A: (Referring to FIG. 4B, A is a first conference terminal, B is a first mobile terminal, C is a second mobile terminal, D is a third mobile terminal, E is a second conference terminal, conference sites at which A and B are located are both a first conference site, a conference site at which C is located is a second conference site, D is a moderator, and a conference site at which E is located is a third conference site.)

Step 400: A connects to D by using WIFI, and obtains a sub-machine address 1 of D.

Step 410: After receiving, by using WIFI, an establishment instruction sent by D, A establishes a remote conference by means of PSTN network dialing.

Step 420: After receiving and parsing a detection instruction sent by D, A detects, by using WIFI, first mobile terminals with a WIFI function enabled at a first conference site, and uses one of the detected first mobile terminals as B.

Step 430: A allocates a sub-machine address 2 to B, and establishes a connection to the detected B.

Step 440: A receives a second dialing instruction sent by D by using WIFI after D inputs a phone number of C, and enables B to dial C according to an identifier of C that is carried in a first dialing instruction, to establish an audio and video link between B and C.

Step 450: After receiving feedback connection information of C that is sent by B, A establishes an SCO audio and video link between A and B.

Step 460: A performs processing such as AGC, AEC, ANS, EQ, or dereverberation on an obtained audio and video signal of the first conference site.

Step 470: After mixing the audio and video signal on which the processing has been performed and an audio and video signal of a third conference site that is sent by E and received by using a PSTN, A encodes a mixed audio and video signal twice, and sends the encoded audio and video signal to B by using WIFI; after performing corresponding decoding processing on the encoded audio and video signal, B sends the decoded audio and video signal to C by using a TD-SCDMA network, to complete transmission of the audio and video signals of the first conference site and the third conference site.

The foregoing step 400 to step 470 are a process of transmitting the audio and video signals of the first conference site and the third conference site to C. In an actual application, an audio and video signal of a second conference site may also be transmitted to A, which is specifically that the audio and video signal of the second conference site is sent to A by using B; A decodes the audio and video signal, performs packet loss compensation, LEC, and mixing on the decoded audio and video signal, plays a mixed audio and video signal by using a loudspeaker, and transmits the mixed audio and video signal to the third conference site by using the PSTN, to complete the receiving of the audio and video signal of the second conference site.

The foregoing step 400 to step 470 are a process of transmitting the audio and video signal of the first conference site to C, that is, a process of adding one conference participant. In an actual application, during the remote conference, when multiple second mobile terminals, that is, multiple conference participants, need to be added, the conference terminal may connect to all the second mobile terminals by using one first mobile terminal, or the conference terminal may connect to the multiple second mobile terminals by using multiple first mobile terminals.

For example, when connecting to three second mobile terminals (a second mobile terminal 1, a second mobile terminal 2, and a second mobile terminal 3) by using one first mobile terminal, a conference terminal A connects to a third mobile terminal by using WIFI. After receiving, by using WIFI, an establishment instruction sent by the third mobile terminal, A establishes a remote conference by using a PSTN. After receiving and parsing a detection instruction sent by the third mobile terminal, the conference terminal A determines, by using WIFI, one mobile terminal in three mobile terminals with a WIFI function enabled, as the first mobile terminal (a first mobile terminal 1), establishes a connection to the first mobile terminal 1, allocates a sub-machine address to the first mobile terminal 1, sends an audio and video signal of another conference site that is received by the conference terminal A and/or an audio and video signal of the conference site 1 that is obtained by the conference terminal A to the second mobile terminal 1 by using the first mobile terminal 1, that is, A connects to the second mobile terminal 1. Then, A sends the audio and video signal of the another conference site that is received by the conference terminal A and/or the audio and video signal of the conference site 1 that is obtained by the conference terminal A to the second mobile terminal 2 by using the first mobile terminal 1, that is, A connects to the second mobile terminal 2. Finally, A sends the audio and video signal of the another conference site that is received by the conference terminal A and/or the audio and video signal of the conference site 1 that is obtained by the conference terminal A to the second mobile terminal 3 by using the first mobile terminal 1, that is, A connects to the second mobile terminal 3.

For another example, when connecting to three second mobile terminals (a second mobile terminal 1, a second mobile terminal 2, and a second mobile terminal 3) by using three first mobile terminals, a conference terminal A connects to a third mobile terminal by using WIFI. After receiving, by using WIFI, an establishment instruction sent by the third mobile terminal, A establishes a remote conference by means of PSTN network dialing. After the conference terminal A receives and parses a detection instruction sent by the third mobile terminal, the conference terminal A determines, by using Bluetooth, three mobile terminals with the WIFI function enabled, as first mobile terminals (a first mobile terminal 1, a first mobile terminal 2, and a first mobile terminal 3), establishes a connection to each of the three mobile terminals, and allocates a corresponding sub-machine address to each of the three mobile terminals: a sub-machine address 1 corresponds to the first mobile terminal 1, a sub-machine address 2 corresponds to the first mobile terminal 2, and a sub-machine address 3 corresponds to the first mobile terminal 3, and sends an audio and video signal of another conference site that is received by the conference terminal A and/or an audio and video signal of the conference site 1 that is obtained by the conference terminal A to the second mobile terminal 1 by using the first mobile terminal 1, that is, A connects to the second mobile terminal 1. Then, A sends the audio and video signal of the another conference site that is received by the conference terminal A and/or the audio and video signal of the conference site 1 that is obtained by the conference terminal A to the second mobile terminal 2 by using the first mobile terminal 2, that is, A connects to the second mobile terminal 2. Finally, A sends the audio and video signal of the another conference site that is received by the conference terminal A and/or the audio and video signal of the conference site 1 that is obtained by the conference terminal A to the second mobile terminal 3 by using the first mobile terminal 3, that is, A connects to the second mobile terminal 3.

### Embodiment 4

Embodiment 4 of the present invention proposes a remote conference implementation apparatus, and as shown in FIG. 5, the implementation apparatus includes:
a detection unit 500, configured to detect a first mobile terminal at a current conference site after a remote conference is established successfully;
a link establishment unit 510, configured to send, through a short-range wireless communications channel, a first dialing instruction to the first mobile terminal detected by the detection unit 500, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier; and
a codec unit 520, configured to encode a received audio and video signal of another conference site and/or an obtained audio and video signal of the current conference site, send the encoded audio and video signal to the second mobile terminal by using the first mobile terminal and based on the audio and video link established by the link establishment unit, receive an audio and video signal sent by the second mobile terminal by using the first mobile terminal, decode the audio and video signal, and then play the decoded audio and video signal.

Preferably, when detecting the first mobile terminal, the detection unit 500 detects the first mobile terminal at the current conference site in a short-range wireless communication manner.

Preferably, the link establishment unit 510 is specifically configured to: receive a second dialing instruction sent by a third mobile terminal, where the second dialing instruction carries the identifier of the second mobile terminal, and send, through the short-range wireless communications channel, the first dialing instruction that carries the identifier of the second mobile terminal to the first mobile terminal detected by the detection unit.

In this embodiment of the present invention, when establishing the remote conference, and when receiving an establishment instruction sent by a third mobile terminal, the detection unit 500 performs network dialing by using a PSTN, and successively inputs identifiers of other conference terminals that are to join the remote conference, to complete the establishment of the remote conference.

In this embodiment of the present invention, when establishing the audio and video link, the link establishment unit 510 enables the first mobile terminal to send a signal that carries the identifier of the second mobile terminal to a first base station, and enables the first base station to send, by using a second base station, the signal that carries the identifier of the second mobile terminal to the second mobile terminal corresponding to the identifier, to establish the audio and video link between the first mobile terminal and the second mobile terminal.

Preferably, the codec unit 520 is specifically configured to: perform audio and video preprocessing on the obtained audio and video signal of the current conference site, where the audio and video preprocessing includes: one or any combination of the following: AGC, AEC, ANS, EQ, and dereverberation; and mix the audio and video signal on which the audio and video preprocessing has been performed and the received audio and video signal of the another conference site and then encode a mixed signal.

Preferably, the codec unit 520 is specifically configured to: receive the audio and video signal sent by the second mobile terminal by using the first mobile terminal, perform decoding on the received audio and video signal, perform post-decoding processing on the decoded audio and video signal, and then play the audio and video signal on which the post-decoding processing has been performed, where a process of the post-decoding processing includes: one or any combination of the following: packet loss compensation, LEC, and mixing.

### Embodiment 5

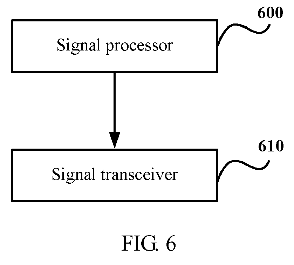

Embodiment 5 of the present invention proposes a conference terminal, and as shown in FIG. 6, the conference terminal includes:
a signal processor 600, configured to detect a first mobile terminal at a current conference site after a remote conference is established successfully, send, through a short-range wireless communications channel, a first dialing instruction to the first mobile terminal detected by the detection unit, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier, encode a received audio and video signal of another conference site and/or an obtained audio and video signal of the current conference site, and receive and decode the audio and video signal sent by the second mobile terminal by using the first mobile terminal; and
a signal transceiver 610, configured to send the encoded audio and video signal of the another conference site and/or obtained audio and video signal of the current conference site to the second mobile terminal by using the first mobile terminal and based on the audio and video link established by the signal processor 600, and play the decoded audio and video signal sent by the second mobile terminal by using the first mobile terminal.

In this embodiment of the present invention, the signal processor 600 is specifically configured to: detect, in a short-range wireless communication manner, the first mobile terminal at the current conference site.

Preferably, the signal processor 600 is specifically configured to: receive a second dialing instruction sent by a third mobile terminal, where the second dialing instruction carries the identifier of the second mobile terminal, and send, through the short-range wireless communications channel, the first dialing instruction that carries the identifier of the second mobile terminal to the detected first mobile terminal.

Preferably, when establishing the remote conference, and when receiving an establishment instruction sent by a third mobile terminal, the signal processor 600 performs network dialing by using a PSTN, and successively inputs identifiers of other conference terminals that are to join the remote conference, to complete the establishment of the remote conference.

Preferably, the signal processor 600 is specifically configured to: enable the first mobile terminal to send a signal that carries the identifier of the second mobile terminal to a first base station, and enable the first base station to send, by using a second base station, the signal that carries the identifier of the second mobile terminal to the second mobile terminal corresponding to the identifier, to establish the audio and video link between the first mobile terminal and the second mobile terminal.

Preferably, the signal processor 600 is specifically configured to: perform audio and video preprocessing on the obtained audio and video signal of the current conference site, where the audio and video preprocessing includes: one or any combination of the following: AGC, AEC, ANS, EQ, and dereverberation; and mix the audio and video signal on which the audio and video preprocessing has been performed and the received audio and video signal of the another conference site and then encode a mixed signal.

Preferably, the signal processor 600 is configured to: receive the audio and video signal sent by the second mobile terminal by using the first mobile terminal, perform decoding on the received audio and video signal, perform post-decoding processing on the decoded audio and video signal, and then play the audio and video signal on which the post-decoding processing has been performed, where a process of the post-decoding processing includes: one or any combination of the following: packet loss compensation, LEC, and mixing.

In summary, in the embodiments of the present invention, a remote conference implementation method is proposed, where a conference terminal detects a first mobile terminal at a current conference site after establishing a remote conference successfully. Then, the conference terminal sends, a first dialing instruction to the detected first mobile terminal through a short-range wireless communications channel, where the first dialing instruction carries an identifier of a second mobile terminal, to enable the first mobile terminal to establish, according to the identifier of the second mobile terminal, an audio and video link between the first mobile terminal and the second mobile terminal corresponding to the identifier. Finally, the conference terminal encodes a received audio and video signal of another conference site and/or an obtained audio and video signal of the current conference site, sends the encoded audio and video signal to the second mobile terminal by using the first mobile terminal and based on the audio and video link, receives an audio and video signal sent by the second mobile terminal by using the first mobile terminal, decodes the audio and video signal, and then plays the decoded audio and video signal. In this way, even if a conference participant that is to join the conference is not within a range with a good sound pickup effect, the conference terminal controls the first mobile terminal at the current conference site to connect to the second mobile terminal that is to join the conference, and sends the received audio and video signal of the another conference site and/or the obtained audio and video signal of the current conference site to the second mobile terminal by using the first mobile terminal, thereby effectively expanding a sound pickup range. In addition, when the second mobile terminal joins the conference, the second mobile terminal can join the remote conference by using only the first mobile terminal at the current conference site, without a need to end an established remote conference connection. In this way, the established remote conference connection does not need to be ended, thereby effectively improving timeliness for a new conference participant to join the conference. The another conference site without a conference terminal can also join the remote conference by using the second mobile terminal, thereby improving timeliness for a new conference participant to join the conference.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A remote conference implementation method, comprising:
detecting, by a conference terminal, a first mobile terminal at a current conference site after establishing a remote conference successfully;
sending, by the conference terminal, a first dialing instruction to the detected first mobile terminal through a short-range wireless communications channel, wherein the first dialing instruction carries an identifier of a second mobile terminal, to enable the first mobile terminal to establish, according to the identifier of the second mobile terminal, an audio and video link between the first mobile terminal and the second mobile terminal corresponding to the identifier; and
encoding, by the conference terminal, a received audio and video signal of another conference site and/or an obtained audio and video signal of the current conference site, sending the encoded audio and video signal to the second mobile terminal by using the first mobile terminal and based on the audio and video link, receiving an audio and video signal sent by the second mobile terminal by using the first mobile terminal, decoding the audio and video signal, and then playing the decoded audio and video signal.

2. The method according to claim 1, wherein the detecting a first mobile terminal at a current conference site specifically comprises:
detecting, in a short-range wireless communication manner, the first mobile terminal at the current conference site.

3. The method according to claim 1 or 2, wherein the sending, by the conference terminal, a first dialing instruction to the detected first mobile terminal through a short-range wireless communications channel specifically comprises:
receiving, by the conference terminal, a second dialing instruction sent by a third mobile terminal, wherein the second dialing instruction carries the identifier of the second mobile terminal, and sending, through the short-range wireless communications channel, the first dialing instruction that carries the identifier of the second mobile terminal to the detected first mobile terminal.

4. The method according to claim 1, wherein the establishing a remote conference specifically comprises:
when receiving an establishment instruction sent by a third mobile terminal, performing network dialing by using a public switched telephone network PSTN, and successively inputting identifiers of other conference terminals that are to join the remote conference, to complete the establishment of the remote conference.

5. The method according to any one of claims 1 to 4, wherein the to enable the first mobile terminal to establish, according to the identifier of the second mobile terminal, an audio and video link between the first mobile terminal and the second mobile terminal corresponding to the identifier comprises:
enabling the first mobile terminal to send a signal that carries the identifier of the second mobile terminal to a first base station, and enabling the first base station to send, by using a second base station, the signal that carries the identifier of the second mobile terminal to the second mobile terminal corresponding to the identifier, to establish the audio and video link between the first mobile terminal and the second mobile terminal.

6. The method according to any one of claims 1 to 5, wherein the encoding, by the conference terminal, a received audio and video signal of another conference site and/or an obtained audio and video signal of the current conference site specifically comprises:
performing, by the conference terminal, audio and video preprocessing on the obtained audio and video signal of the current conference site, wherein the audio and video preprocessing comprises: one or any combination of the following: automatic gain control AGC, acoustic echo cancelation AEC, automatic noise suppression ANS, dynamic equalization EQ, and dereverberation; and
mixing, by the conference terminal, the audio and video signal on which the audio and video preprocessing has been performed and the received audio and video signal of the another conference site and then encoding a mixed signal.

7. The method according to any one of claims 1 to 5, wherein the receiving an audio and video signal sent by the second mobile terminal by using the first mobile terminal, decoding the audio and video signal, and then playing the decoded audio and video signal specifically comprises:
receiving the audio and video signal sent by the second mobile terminal by using the first mobile terminal, performing decoding on the received audio and video signal and performing post-decoding processing on the decoded audio and video signal, and then playing the audio and video signal on which the post-decoding processing has been performed, wherein a process of the post-decoding processing comprises: one or any combination of the following: packet loss compensation, line echo cancelation LEC, and mixing.

8. A remote conference implementation apparatus, comprising:
a detection unit, configured to detect a first mobile terminal at a current conference site after a remote conference is established successfully;
a link establishment unit, configured to send, through a short-range wireless communications channel, a first dialing instruction to the first mobile terminal detected by the detection unit, wherein the first dialing instruction carries an identifier of a second mobile terminal, to enable the first mobile terminal to establish, according to the identifier of the second mobile terminal, an audio and video link between the first mobile terminal and the second mobile terminal corresponding to the identifier; and
a codec unit, configured to encode a received audio and video signal of another conference site and/or an obtained audio and video signal of the current conference site, send the encoded audio and video signal to the second mobile terminal by using the first mobile terminal and based on the audio and video link established by the link establishment unit, receive an audio and video signal sent by the second mobile terminal by using the first mobile terminal, decode the audio and video signal, and then play the decoded audio and video signal.

9. The implementation apparatus according to claim 8, wherein the detection unit is specifically configured to: detect, in a short-range wireless communication manner, the first mobile terminal at the current conference site.

10. The implementation apparatus according to claim 8 or 9, wherein the link establishment unit is specifically configured to: receive a second dialing instruction sent by a third mobile terminal, wherein the second dialing instruction carries the identifier of the second mobile terminal, and send, through the short-range wireless communications channel, the first dialing instruction that carries the identifier of the second mobile terminal to the first mobile terminal detected by the detection unit.

11. The implementation apparatus according to claim 8, wherein the detection unit is specifically configured to: when receiving an establishment instruction sent by a third mobile terminal, perform network dialing by using a public switched telephone network PSTN, and successively input identifiers of other conference terminals that are to join the remote conference, to complete the establishment of the remote conference.

12. The implementation apparatus according to any one of claims 8 to 11, wherein the link establishment unit is specifically configured to: enable the first mobile terminal to send a signal that carries the identifier of the second mobile terminal to a first base station, and enable the first base station to send, by using a second base station, the signal that carries the identifier of the second mobile terminal to the second mobile terminal corresponding to the identifier, to establish the audio and video link between the first mobile terminal and the second mobile terminal.

13. The implementation apparatus according to any one of claims 8 to 12, wherein the codec unit is specifically configured to: perform audio and video preprocessing on the obtained audio and video signal of the current conference site, wherein the audio and video preprocessing comprises: one or any combination of the following: automatic gain control AGC, acoustic echo cancelation AEC, automatic noise suppression ANS, dynamic equalization EQ, and dereverberation; and mix the audio and video signal on which the audio and video preprocessing has been performed and the received audio and video signal of the another conference site and then encode a mixed signal.

14. The implementation apparatus according to any one of claims 8 to 12, wherein the codec unit is specifically configured to: receive the audio and video signal sent by the second mobile terminal by using the first mobile terminal, perform decoding on the received audio and video signal, perform post-decoding processing on the decoded audio and video signal, and then play the audio and video signal on which the post-decoding processing has been performed, wherein a process of the post-decoding processing comprises: one or any combination of the following: packet loss compensation, line echo cancelation LEC, and mixing.

15. A conference terminal, comprising:
a signal processor, configured to detect a first mobile terminal at a current conference site after a remote conference is established successfully, send, through a short-range wireless communications channel, a first dialing instruction to the first mobile terminal detected by the detection unit, wherein the first dialing instruction carries an identifier of a second mobile terminal, to enable the first mobile terminal to establish, according to the identifier of the second mobile terminal, an audio and video link between the first mobile terminal and the second mobile terminal corresponding to the identifier, encode a received audio and video signal of another conference site and/or an obtained audio and video signal of the current conference site, and receive and decode the audio and video signal sent by the second mobile terminal by using the first mobile terminal; and
a signal transceiver, configured to send the encoded audio and video signal of the another conference site and/or obtained audio and video signal of the current conference site to the second mobile terminal by using the first mobile terminal and based on the audio and video link established by the signal processor, and play the decoded audio and video signal sent by the second mobile terminal by using the first mobile terminal.

16. The conference terminal according to claim 15, wherein the signal processor is specifically configured to: detect, in a short-range wireless communication manner, the first mobile terminal at the current conference site.

17. The conference terminal according to claim 15 or 16, wherein the signal processor is specifically configured to: receive a second dialing instruction sent by a third mobile terminal, wherein the second dialing instruction carries the identifier of the second mobile terminal, and send, through the short-range wireless communications channel, the first dialing instruction that carries the identifier of the second mobile terminal to the detected first mobile terminal.

18. The conference terminal according to claim 15, wherein the signal processor is specifically configured to: when receiving an establishment instruction sent by a third mobile terminal, perform network dialing by using a public switched telephone network PSTN, and successively input identifiers of other conference terminals that are to join the remote conference, to complete the establishment of the remote conference.

19. The conference terminal according to any one of claims 15 to 18, wherein the signal processor is specifically configured to: enable the first mobile terminal to send a signal that carries the identifier of the second mobile terminal to a first base station, and enable the first base station to send, by using a second base station, the signal that carries the identifier of the second mobile terminal to the second mobile terminal corresponding to the identifier, to establish the audio and video link between the first mobile terminal and the second mobile terminal.

20. The conference terminal according to any one of claims 15 to 19, wherein the signal processor is specifically configured to: perform audio and video preprocessing on the obtained audio and video signal of the current conference site, wherein the audio and video preprocessing comprises: one or any combination of the following: automatic gain control AGC, acoustic echo cancelation AEC, automatic noise suppression ANS, dynamic equalization EQ, and dereverberation; and mix the audio and video signal on which the audio and video preprocessing has been performed and the received audio and video signal of the another conference site and then encode a mixed signal.

21. The conference terminal according to any one of claims 15 to 19, wherein the signal processor is configured to: receive the audio and video signal sent by the second mobile terminal by using the first mobile terminal, perform decoding on the received audio and video signal, perform post-decoding processing on the decoded audio and video signal, and then play the audio and video signal on which the post-decoding processing has been performed, wherein a process of the post-decoding processing comprises: one or any combination of the following: packet loss compensation, line echo cancelation LEC, and mixing.
